# Europäisches Patentamt

## European Patent Office

## Office européen des brevets

(11) Publication number: **0 129 039**
**B1**

(12) **EUROPEAN PATENT SPECIFICATION**

(45) Date of publication of patent specification: **27.01.88**

(51) Int. Cl.⁴: **G 06 F 7/49**

(21) Application number: **84105182.4**

(22) Date of filing: **09.05.84**

(54) Improved multiplier architecture.

(30) Priority: **15.06.83 US 504358**

(43) Date of publication of application:
**27.12.84 Bulletin 84/52**

(45) Publication of the grant of the patent:
**27.01.88 Bulletin 88/04**

(84) Designated Contracting States:
**DE FR GB IT**

(56) References cited:

IFIP-CONGRESS (preprint), 27th August - 1st
September 1962, Munich, vol. XVIII, no. 3,
pages 297-301; A. AVIZIENIS: "On a flexible
implementation of digital computer
arithmetic"

PROCEEDINGS OF THE 10th INTERNATIONAL
SYMPOSIUM ON MULTIPLE-VALUED LOGIC,
1980, Evanston, II., pages 272-277, IEEE, New
York, US; M. KAMEYAMA et al.: "Design of
radix 4 signed-digit arithmetic circuits for
digital filtering"

(73) Proprietor: **International Business Machines
Corporation
Old Orchard Road
Armonk, N.Y. 10504 (US)**

(72) Inventor: **Frey, Alexander H.
6505 76th Street
Cabin John, MD 20818 (US)**

(74) Representative: **Möhlen, Wolfgang C., Dipl.-Ing.
IBM Corporation Säumerstrasse 4
CH-8803 Rüschlikon (CH)**

Courier Press, Leamington Spa, England.

# 0 129 039

## Description

The invention disclosed broadly relates to digital multipliers and more particularly relates to binary digital multipliers.

Existing multipliers which operate on pairs of binary operands suffer from several deficiencies which contribute to the prolongation of their multiplication operations. For example, the addition of the partial products requires the propagation of carry bits which can require an extensive increment in time necessary for the carry bits to fully propagate through all of the binary bit orders. A second problem is that the addition of the partial products is conventionally done in a sequential manner in order to avoid undue complexity in the adder circuitry. Parallel operations, which could otherwise shorten the duration of the addition of the partial products, cannot be conveniently carried out without complex arithmetic circuitry capable of handling multiple carry bits generated in any particular bit column.

The article "Design of radix 4 signed-digit arithmetic circuits for digital filtering" by M. Kameyama and T. Higuchi, published in the Proceedings of the 10th International Symposium on Multiple-Valued Logic, Evanston IL 1980, pp. 272—277 describes arithmetic circuitry for high-speed digital filter operations, in which numbers are represented by signed quaternary digits. A multiplication scheme and a multiplication circuit are disclosed whereby in a first step all partial products of two numbers which are both represented by signed quaternary digits are formed, and in a second step these partial products are added up by an array of adders to yield the final product which also consists of signed quaternary digits. This scheme and circuit has the disadvantage that both operand a and b have to be converted to quaternary representation. It would be desirable to save one of these translations if possible.

It is an object of the invention to provide an improved multiplier which enables the simplified addition of partial products in parallel and which requires the conversion of only one operand prior to multiplication.

It is yet a further object of the invention to provide an improved multiplier which eliminates the propagation of binary carry bits in the addition of its partial products, in an improved manner.

It is yet a further object of the invention to provide an improved multiplier which has a duration for the addition of partial products which grows at a rate less than a linear rate with respect to the size of the operands multiplied.

These and other objects, features and advantages of the invention are accomplished by the improved multiplier for multiplying a first operand times a second operand which is defined in the claim.

In the sequel, an embodiment of the improved multiplier is described with reference to the drawings listed below:

Figure 1 is a functional block diagram of an improved multiplier according to the invention;

Figure 2 is a schematic diagram of an improved organization for the addition of the partial products in a multiplier according to the invention;

Figure 3 is a detailed view of a portion of the functional elements described in Figure 2.

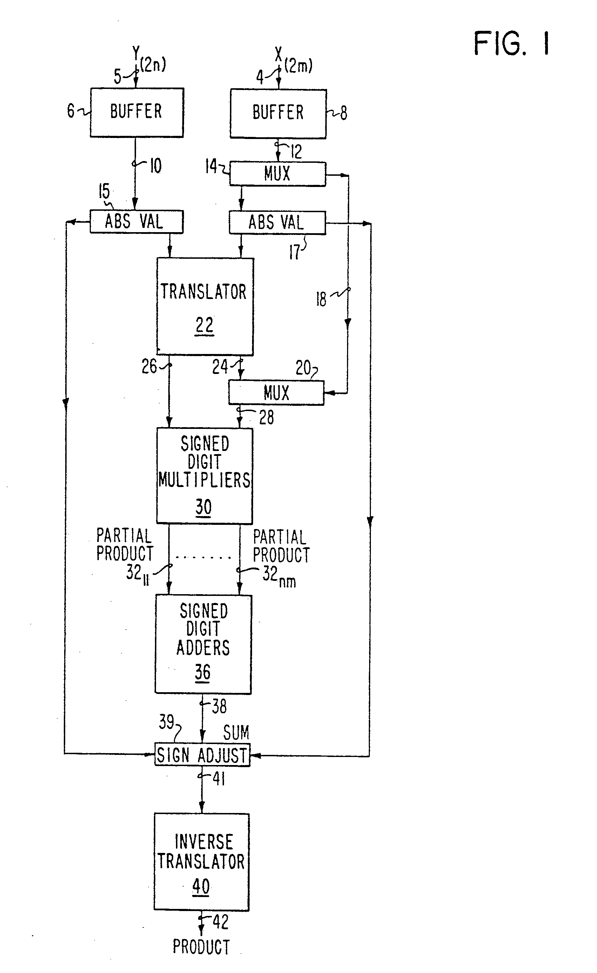

The architectural features of the new multiplier which is faster in operation than are prior art multipliers are disclosed in Figures 1 to 3.

The multiplier design summary of Table 1 shows four stages of the design. First is the translate stage for the two inputs X and Y to the multiplier. This translation is similar to the conventional Booth-type of translation. After the Booth translation, the multiplication by single signed digits takes place. The multiplier forms partial products by a shift and a multiplex operation to invert the signs when necessary. Following the multiplication, the adder tree combines the partial products. It is a no ripple adder designed for a pair of signed digit inputs and it absorbs the carry from the previous column of adders. This can be referred to as a "carry sponge" adder. After all the additions are completed and the final multiplied number comes out of the last adder stage, the number is still in the signed digit form in which it has both plus and minus digits in various bit positions. Before the result can be furnished, an inverse translation is necessary to put it back into standard binary form. That inverse translation does involve a ripple which is intended to be rippled through transmission gates for high speed and which is easily implemented with FET transmission gates. Thus, there are four stages: translate, multiply, add, and inverse translate.

### The translation stage

A translation is done by the translator 22 of Figure 1, for every even pair of bits from the Y input, as shown in Table 2. It is possible to translate any pair of bits from the X input. The translation is based upon the following principle. Given a pair of bits $X_i$ and $X_{i+1}$, if the high order bit ($X_{i+1}$) is a 1, it would automatically generate a carry-out and replace that bit by a −1. Thus that bit which appears in the "2's" position of that pair of bits will generate a carry-out of four and be replaced by a −2 (4−2 being equivalent to the 2 that was there in the first place). Therefore to determine the proper value for the pair of bits ($X_i$ and $X_{i+1}$) we also need to look at bit $X_{i-1}$ to see if that generated a carry-in. The carry-in from $X_{i-1}$ has the same weight as $X_i$. Therefore, the translation of the three bits $X_{i-1}$, $X_i$ and $X_{i+1}$ is shown in Table 2, where a 1 in the column for $X_i$ or $X_{i-1}$ corresponds to a 1 in the $X_i$ position and a 1 in the column $X_{i+1}$ corresponds to a −1 in that column or a −2 in the number. For example on the first row, the $X_{i+1}$ is a 1, therefore we have a −2, $X_i$ is a 1 and $X_{i-1}$ is a 1, they add up to a +2 and the net result is $X_i'=0$. All the outputs then are between +2 and −2.

2

The multiplication stage

As shown in Table 3, since the multiplier expression coming into the multiply operation has now been translated so that it takes on values between +2 and −2, the multiply operation carried out by the multiplier 30 of Figure 1 consists of either a one-bit shift or no shift or zero and the sign change if the input is minus. So multiplying by Y equal to +2 constitutes shifting the input X values up one position. That is the Xi−1 inputs take the place of the Xi inputs, as shown in Table 3.

The adder stage

As shown in Table 4a, the basic adder cell for the adder tree 36 of Figure 1 takes an input between −2 and +3. Although the multiplier provides inputs between −2 and +2, the adder outputs are between −2 and +3. Therefore in the adder tree, the adder inputs must be allowed to be between −2 and +3. The adder will accept two inputs between −2 and +3 and will receive a carry-in of −1, 0 or +1. It will generate a carry-out of −4, 0 or +4, independent of the carry-in (it is very important that it be independent of the carry-in) and an output between −2 and +3. This is carried out in the following way. Add the two inputs A and B, and if the resulting sum is between +3 and +6, generate a plus carry-out. If the resulting sum is between −1 and +2, generate a zero carry-out. If the resulting sum is between −4 and −2, generate a minus carry-out. Then the sum of A+B minus the carry-out that has been generated, represents a ±4 or a 0 and results in a number that is between −1 and +2. And adding the carry-in to that number results in a number between −2 and +3 and the carry-in does not affect the carry-out.

When using the adder as shown in Table 4a it is necessary to translate both the X operand and the Y operand as shown in Table 2. However, it is possible to avoid the need for translating the operand X by using the basic adder cell as shown in Table 4b. In this case, the inputs to the adder can both be between −3 and +3 and the output generated by the adder is also between −3 and +3. In both cases the carry-out generated from the adder is independent of the carry-in.

The inverse translation stage

As shown in Table 5, the inverse translation operation, which is carried out by the inverse translator 40 of Figure 1, receives an input from the last adder that is between −2 and +3. The multiplier expression at the start is assumed to have a positive value for the input. In the translate process, an adjustment is made to turn negative numbers to positive. At the output, the result is made negative when necessary, that is, when a positive number was multiplied by a positive number, the final output is made negative by reversing the signs of the output of the last adder which is the input to the inverse translator. This means that the inverse translator must be capable of operating on numbers between −3 and +3. The purpose of the inverse translator is to eliminate any negative values from this form of the number. The basic principle used is to replace a −1 in any bit column by a −1 in the next higher bit column and a +1 in that bit column. That is, use the fact that −1=−2+1. Thus, if the input to the inverse translator is between −3 and −1, it automatically generates a −1 carry-out. If the value of the input to the inverse translate is zero, the carry-out is equal to the carry-in, and if the value of the input to the inverse translator is positive, the negative carry-out is zero. The outputs for the values coming into this particular inverse translator are given in Table 5 where the columns represent the output for various input states depending upon whether the minus carry-in is true or false, where the one's row represents true for the minus carry-in and the zero row represents false for the minus carry-in. Notice that where a minus carry-out was generated, +4 was added to the number. That completes the basic concept of the multiplier.

Figure 1 illustrates a functional block diagram of the improved multiplier invention. The first operand X can be an eight bit, 16 bit, or a 24 bit binary number input on line 4 to the buffer 8. The second input Y is also a corresponding 8 bit, 16 bit, or 24 bit binary number input on line 5 to the buffer 6. The number of bits in the operand X is not necessarily the same as the number of bits in the operand Y. In addition, as long as the number of bits including sign in each operand is even, there is no limit as to their relative size.

The output of each respective buffer, 6 and 8, is furnished on the respective lines 10 and 12. The output of the buffer 6 is input to the absolute value generator 15 which provides the absolute value of the operand Y to a first input of the translator 22. The output 12 of the buffer 8 passes through the multiplexer 14 and will either pass around the translator 22 via line 18 or will pass through the absolute value generator 17 to a second input to the translator 22. The operation of taking an absolute value produces an odd number of bits to be furnished to the translator. The translator 22 carries out the operations described in Table 2. The high order pair always must have a zero in the higher order bit position in order to avoid creating the need for a still higher order pair.

First output 26 of the translator 22 is input to the multipliers 30, and the second output 24 of the translator 22 is passed to the multiplexer 20 and then over the line 28 to the second input of the multipliers 30. If the multiplexer 14 had been set so that the operand X passed over the line 18 directly to the multipliers 30, it would then pass through the multiplexer 20. Alternately, if the operand X had passed through the multiplexer 14 to the translator 22, then the output 24 from the translator 22 would have passed through the multiplexer 20 over the line 28 to the multipliers 30. The setting of the multiplexers 14 and 20 is dependent on the functions implemented in the adders 36. If the adders 36 are designed to implement the functions as described in Table 4a, then the multiplexers are set to pass the values of the operand X through the translator. On the other hand, if the adders 36 are designed to implement the functions described in Table 4b, then the multiplexers 14 and 20 are set to bypass the translator 22 and send the values of the operand X over the line 18.

The multipliers 30 operate on the principle described in Table 3. When the input operand X has 2M binary bits and the operand Y has 2N binary bits, then a total of N×M partial products each consisting of a single signed digit are produced by the multipliers 30. These partial products are furnished on the lines $32_{11}$ through $32_{NM}$ as is illustrated in Figure 1. The notation used in Table 3 is that I takes on values from 1 through 2M and J takes on values from 1 through 2N.

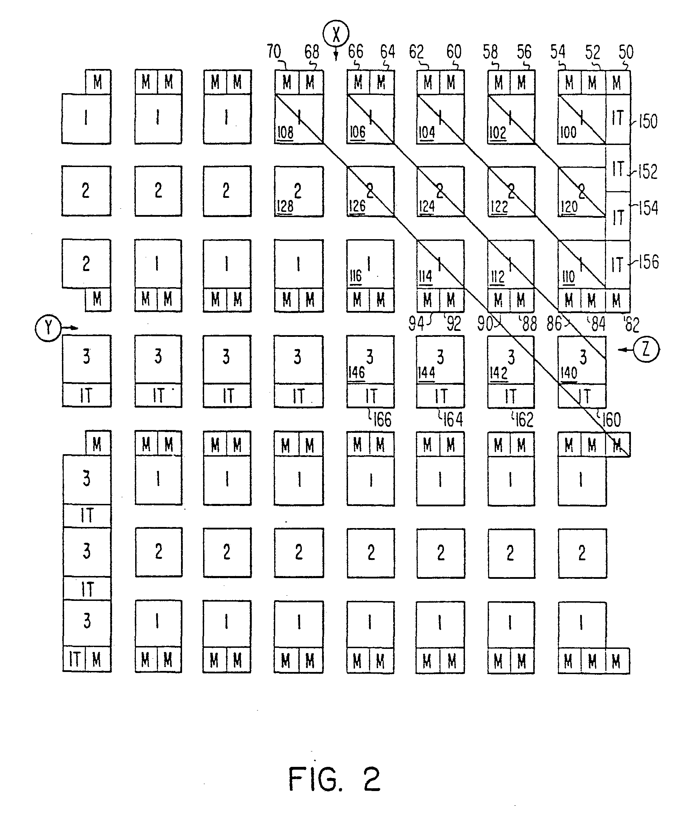

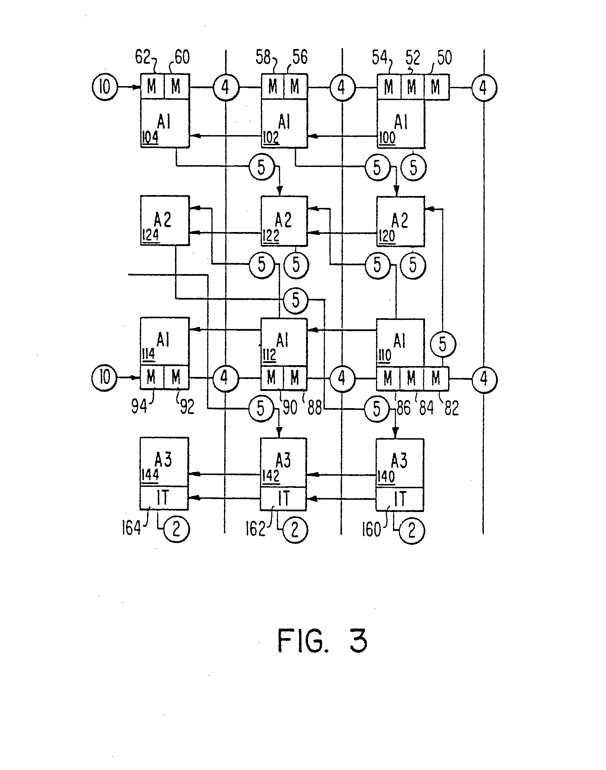

The partial products provided on lines $32_{11}$ through $32_{NM}$ are passed to the adders 36 which operate in accordance with the illustration in Table 4. All partial products where the sum of the two subscripts I and J are equal, are added together in the adders 36 as illustrated in Figure 2. For example, the partial product $P_{62}$ available on line $32_{62}$ will be added to the partial product $P_{44}$ available on line $32_{44}$, and the result of that sum will be added to the partial product $P_{26}$ available on line $32_{26}$. The self-absorptive quality of the carry operations as described above in Table 4 enables the combining of sums in this manner to be done in parallel operating adders, simultaneously. This is schematically illustrated in Figures 2 and 3. The output of the adder is M+N signed digits which are passed through the sign adjuster 39 which restores the appropriate sign to the outputs of the adders 36 corresponding to the signs of the operands X and Y. The output of the sign adjuster 39 is passed over line 41 to the inverse translator 40 whose principle of operation is described in Table 5. The output from the inverse translator 40 on line 42 is the desired product of the operands X and Y, expressed in normal binary notation having $2(M+N)-1$ binary digits.

Figure 2 shows a layout for a physical embodiment of the signed digit partial product generators, signed digit adders and inverse translator shown in Figure 1. A more detailed description of the connectivity of a portion of Figure 2 is shown in Figure 3 which shows the upper right-hand portion of Figure 2 in greater detail. In Figure 2, items 50 through 94 represent partial product generators, each of which has a single signed digit as an output. The inputs to the partial product generators 50 through 94 are the translated values of the operands X and Y shown in Figure 2 as coming from the top of the figure and the left-hand side of the figure. The outputs of the partial product generators 50 through 94 (which are labelled M in Figure 2) provide the inputs to the first set of basic adder cells 100 through 116 (which are labelled 1 in Figure 2), all of which will operate simultaneously. The first set of adder cells to operate simultaneously are the adders numbered 100 through 116. The partial product generators are arranged in two banks, 50 to 70 and 82 to 94. The first set of adders are arranged in two banks, 100 to 108 and 110 to 116. The outputs of partial product generators in the first bank are passed to the adders in the first bank and the outputs of the partial product generators in the second bank are passed to the adders in the second bank. Each of the first adders 100 to 116 receives two signed digits from the partial product generators 50 through 94 and produces a single signed digit output. The signed digit outputs from the adders 100 through 116 constitute the signed digit inputs to the second set of adders numbered 120 to 128 (which are labelled 2 in Figure 2). Thus, each of the adders 120 to 128 receives two signed digit inputs, one from an adder in the first bank 100 to 108 and one from an adder in the second bank 110 to 116, and produces a single signed digit output which goes to one of a third set of adders 140 to 146 (which are labelled 3 in Figure 2) which constitute the third level of adders operating sequentially. Thus, all of the first set of adders 100 to 116 operate in parallel followed by all of the second set of adders 120 to 128 which operate in parallel followed by all of the third set of adders 140 to 146 which operate in parallel to produce signed digit outputs which then go to the inverse translators 150 to 166 (which are labelled IT in Figure 2).

In Figure 3, which shows the detailed interconnection of the elements shown in Figure 2, the small numbers in the circles indicate the number of wires which are intended to be used to carry the signed digit values from element to element in Figure 3.

## Operation of the invention

A sequence of illustrative examples follows for the invention.

### Example 1

Table 6 shows the example of multiplying the number 23 which will be the X operand, times the number 41 which will be the Y operand. The binary expression for 23 is 010111 and the binary expression for 41 is 00101001.

The first step is to carry out the translation of the binary expression for 41 by means of the translate operation as illustrated in Table 2. The eight binary numbers are grouped into four pairs which are labelled from right to left as 2, 4, 6, and 8. The translation is carried out converting the binary expression for 41 into the sequence of numbers from left to right 1, −1, −2, 1, which is otherwise expressed in binary notation as (01) (0−1) (−10) (01).

With the translated form of Y expressed in this manner, the standard binary multiplication is carried out generating the array of four partial products shown in Table 6. The binary expression for the X operand is shown in line 1, the binary expression for the translated form of operand Y is shown in line 2, and the signed binary expression for the four partial products are shown in lines 3 through 6 of Table 6. The multiplication is carried out in accordance with the operation described in Table 3. The partial products are organized in pairs and those pairs having the same sum of I and J are vertically aligned so as to enable their addition to take place as follows.

The addition of the partial products is carried out with the first two partial products in rows 3 and 4 being added to form their sum in the row 7 and the addition of the partial products in rows 5 and 6 being added to form their sum in row 8. Then, the respective sums in rows 7 and 8 are added to form the combined sum in row 9. These additions are carried out in accordance with the principle described in Table 4.

In the final step, the inverse translation as was described in Table 5 is carried out on the sum in row 9, resulting in the true binary expression of the product of the operand X and Y in row 10.

As can be seen from reference to the example in Table 6, a substantial savings in the time necessary to carry out the multiplication is achieved by avoiding the necessity of rippling the carries in the addition of the partial products, this advantage accruing from the absorptive qualities of the carry in each respective pair of signed digits.

Example 2

The operands X and Y are shown on lines 2 and 1 of Table 7. Those two operands would be input via lines 4 and 5 to buffers 8 and 6. Line 2 shows the operand X having decimal value 310 and the operand Y shown on line 1 having the value −493. Line 3 shows the translation of the absolute value of Y. The value of Y equal to −493 was passed through the absolute value circuit 15 to give the positive value corresponding to 493 also shown on line 1 and the translator 22 translated that value of Y according to the rules of Table 2 into the sequence of signed digits shown on line 3. Each of these signed digits takes on a value in the range −2 to +2 and provides one set of inputs to the signed digit multiplier 30. The operand X is sent to the signed digit multiplier bypassing translator 22 via line 18. The five lines 4 through 8 show the value of X being multiplied by each of the signed digits in the translated form of Y shown in line 3. This shows the binary representation of these partial products.

The signed digit output of the same partial products is shown on lines 9 through 13. The only difference between lines 4 through 8 and lines 9 through 13 is the translation of the values to signed digit form as opposed to binary form. This is shown for the convenience of the reader. Each digit in rows 9 through 13 represents a partial product of signed digits from the operands X and Y. These partial products are aligned in columns corresponding to the digits which must be added together. It should be noted that because of the properties of the basic adder cell in which the carry-out is determined independently of the carry-in, that pairs of partial products may be added together simultaneously in order to speed up the operation of the multiplier. For example, in the middle column of the array shown in lines 9 through 13, there are five signed digits. Normal serial multipliers would require four consecutive additions in order to add those five digits using the basic adder cell described in Tables 4a or 4b. In particular, in this example, we will use the adder cell described in Table 4b. The first and second signed digits can be added together in parallel to the addition of the third and fourth digits in that column. Having done those two pairs of additions simultaneously, the two sums arrived at may be added together and that sum can then be added to the fifth and last digit in that column, thus requiring only the time of three additions rather than the time of four additions. It should further be noted that the time of three additions is sufficient to add up to eight digits in that column which in normal multipliers would require seven sequential additions to perform. This is the case that is normally found in 16×16 bit multipliers. The sums of lines 9 and 10 are shown on line 14. Notice that in the fourth column from the right, the digits 0 and −3 were added and the sum came out +1 with a carry of −1 being moved to the column immediately to the left, namely the fifth column from the right. It should further be noted that in the fourth column from the left, the input on line 10 took on the value −3 which would not have been allowed had the basic adder cell been built to conform to the rules of Table 4a rather than Table 4b. The sum of lines 11 and 12 is shown on line 15. Again, the fifth column from the right shows the addition of −3 and 0 to be +1 with a carry of −1 being moved to the sixth column from the right and producing the sum of −1 as the output in that column. The sum of lines 14 and 15 is shown on line 17. In this case, in the sixth column from the right, the values −1 and −1 add to produce −2. This is again a difference between the rules of Table 4b and the rules of Table 4a, where the sum of −1 and −1 in Table 4b does not produce a minus carry-out. Finally, the values on line 17 and line 18 are summed and the result is shown on line 19. Since the value of the operand Y was negative, and the value of the operand X was positive, we must do a sign adjust in order to correct the final output to reflect the minus value which is required. The values on line 19 appear at the output of the signed digit adders 36 and pass through the sign adjust 39 to produce the digits shown on line 21 which are passed via line 41 to the inverse translator. The inverse translator then produces the final binary output shown on line 22 which corresponds to the value −152830 in its two's complement form. This final product is then put out via line 42.

Thus the invention enables one to use the array of signed digit adders using either the rules of Table 4a or the rules of Table 4b to obtain a number of sequential adds to produce the final multiply which grows only with the log to the base 2 of the length of the operands as opposed to a sequence of add operations which grows linearly with the length of the operands.

**0 129 039**

TABLE 1

DESIGN SUMMARY

Four Stages: (Using Plus and Minus Values)
— Translate X and Y (No Ripple, Similar to Booth)
— Multiply (Shift and Multiplex for Sign, no Ripple)
— Adder Tree (No Ripple Carry)
— Inverse Translate (Ripple Through Transmission Gates)

TABLE 2

TRANSLATE FOR X AND Y
o For Positive Number (2's Complement)

| $X_{I+1}$ | $X_I$ | $X_{I-1} \longrightarrow X_I'$ | |
|:---:|:---:|:---:|:---:|
| 1 | 1 | 1 | 0 |
| 1 | 1 | 0 | $-1$ |
| 1 | 0 | 1 | $-1$ |
| 1 | 0 | 0 | $-2$ |
| 0 | 1 | 1 | $+2$ |
| 0 | 1 | 0 | $+1$ |
| 0 | 0 | 1 | $+1$ |
| 0 | 0 | 0 | 0 |

Translate X for Every I
Translate Y for I Even

o For Negative Numbers Use $\bar{X}_I$ for $X_I$ and Use $X_{15}$ for $X_{-1}$.

TABLE 3

MULTIPLY

For $Y_j'=+2$; $X_I' \cdot Y_j'=+X'_{I-1}$

$Y_j'=-2$; $X_I' \cdot Y_j'=-X'_{I-1}$

$Y_j'=+1$; $X_I' \cdot Y_j'=+X_I'$

$Y_j'=-1$; $X_I' \cdot Y_j'=-X_I'$

$Y_j'= \ \ 0$; $X_I' \cdot Y_j'=0$

For all I, j pairs with I and j even. Note that $-2 \leq X_I' \cdot Y_j' \leq +2$ for all I, j.

TABLE 4a

BASIC ADDER CELL

INPUTS: $-2 \leq A \leq +3$
$-2 \leq B \leq +3$
Carry In$=-1$, 0, $+1$

OUTPUTS: Carry Out$=-4$, 0, $+4$ Independent of Carry In.
$-2 \leq C \leq +3$

For $+3 \leq A+B \leq +6$, Carry Out$=+4$
$+1 \leq A+B \leq +2$, Carry Out$=0$
$-4 \leq A+B \leq -2$, Carry Out$=-4$

Then A+B$-$(Carry Out)$=-1$, 0, $+1$, $+2$ and
$-2 \leq [A+B-(\text{Carry Out})]+\text{Carry In} \leq +3$

6

TABLE 4b

BASIC ADDER CELL

INPUTS: $-3 \le A \le +3$
$-3 \le B \le +3$
Carry In $= -1, 0, +1$

OUTPUTS: Carry Out $= -4, 0, +4$ Independent of Carry In
$-3 \le C \le +3$

For $+3 \le A+B \le +6$, Carry Out $= +4$
$-2 \le A+B \le +2$, Carry Out $= 0$
$-6 \le A+B \le -3$, Carry Out $= -4$

Then $A+B-(Carry\ Out) = -2, -1, 0, +1, +2$
$-3 \le [A+B-(Carry\ Out)+(Carry\ In)] \le +3$

TABLE 5

INVERSE TRANSLATE

— INPUT: $-2 \le Z_i' \le +3$

— For Negative Output, Change $Z_i'$ to $-Z_i'$
Thus, $-3 \le Z_i' \le +3$

— To Eliminate Negative Values, Use $-1 = -2+1$
Thus

$-3 \le Z_i' \le -1 \rightarrow -1,$ OUT $= 1$
$Z_i' = 0 \qquad \rightarrow -1,$ OUT $= -1,$ IN
$+1 \le Z_i' \le +3 \rightarrow -1,$ OUT $= 0$

— $Z_i$ OUT is given by the Table

|  |  | $Z_i'$ | | | | | | |
|---|---|---|---|---|---|---|---|---|
|  |  | +3 | +2 | +1 | 0 | −1 | −2 | −3 |
| −1, IN | 1 | 2 | 1 | 0 | 3 | 2 | 1 | 0 |
|  | 0 | 3 | 2 | 1 | 0 | 3 | 2 | 1 |

TABLE 6

$X = 23 = (0 \quad 1) \ (0 \quad 1) \ (1 \quad 1)$
$Y = 41 = (0 \quad 0) \ (1 \quad 0) \ (1 \quad 0) \ (0 \quad 1) = (0 \quad 1) \ (0 -1) \ (-1 \quad 0) \ (0 \quad 1)$

|  |  |  |  |  |  | 0 | 1 | 0 | 1 | 1 | 1 |
|---|---|---|---|---|---|---|---|---|---|---|---|
|  |  |  |  | −1 | 0 | −1 | −1 | −1 | 0 | | |
|  |  | 0 | −1 | 0 | −1 | −1 | −1 | | | | |
| 0 | 1 | 0 | 1 | 1 | 1 | | | | | | |

|  |  | 0 | 0 | −1 | 0 | −1 | 0 | 0 | −1 | 1 | 1 |
|---|---|---|---|---|---|---|---|---|---|---|---|
| 0 | 1 | 0 | 0 | 1 | 0 | −1 | −1 | | | | |

| 0 | 1 | 0 | 0 | 0 | −1 | 0 | −1 | 0 | −1 | 1 | 1 |
|---|---|---|---|---|---|---|---|---|---|---|---|

| 0 | | 1 | 1 | 1 | 0 | 1 | 0 | 1 | 1 | 1 | 1 |
|---|---|---|---|---|---|---|---|---|---|---|---|

7

TABLE 7

Y=−493=Abs. Val. (1000010011)=(0  1) (1  1) (1  0) (1  1) (0  1)
X=310=(0  1) (0  0) (1  1) (0  1) (1  0)
T(Y)=2  0  −1  −1  1

| | | | | | | | | |
|---|---|---|---|---|---|---|---|---|
| | | | | 0  1 | 0  0 | 1  1 | 0  1 | 1  0 |
| | | | 0  −1 | 0  0 | −1  −1 | 0  −1 | −1  0 | |
| | | 0  −1 | 0  0 | −1  −1 | 0  −1 | −1  0 | | |
| | 0  0 | 0  0 | 0  0 | 0  0 | 0  0 | | | |
| 1  0 | 0  1 | 1  0 | 1  1 | 0  0 | | | | |
| | | | | 1 | 0 | 3 | 1 | 2 |
| | | | −1 | 0 | −3 | −1 | −2 | |
| | | −1 | 0 | −3 | −1 | −2 | | |
| | 0 | 0 | 0 | 0 | 0 | | | |
| 2 | 1 | 2 | 3 | 0 | | | | |
| | | | −1 | 0 | +1 | 2 | −1 | +2 |
| | | 0 | −1 | −1 | +1 | −1 | −2 | |
| 2 | 1 | 2 | 3 | 0 | | | | |
| | 0 | −1 | −2 | +1 | 0 | 0 | −1 | +2 |
| 2 | 1 | 2 | 3 | 0 | | | | |
| 2 | +1 | +1 | +1 | +1 | 0 | 0 | −1 | +2 |
| 0  1  0 | 0  1 | 0  1 | 0  1 | 0  0 | 1  1 | 1  1 | 1  1 | 1  0 |
| −2 | −1 | −1 | −1 | −1 | 0 | 0 | +1 | −2 |
| −1  0  1 | 1  0 | 1  0 | 1  0 | 1  1 | 0  0 | 0  0 | 0  0 | 1  0 |

**Claim**

An improved multiplier for multiplying a first operand Y times a second operand X, comprising:
a Booth-type translator (22) having an input connected to receive the first operand Y having 2N binary bits $Y_j$ grouped into N pairs ($Y_{j+1}$, $Y_j$), for translating the sequence of N pairs ($Y_{j+1}$, $Y_j$) of said first operand Y into a sequence of N signed digits ($Y_j'$), said translator operating on positive 2's complement numbers, to translate, for j even,

| $Y_{j+1}$ | $Y_j$ | $Y_{j-1}$ | $\longrightarrow Y_j'$ |
|---|---|---|---|
| 1 | 1 | 1 | 0 |
| 1 | 1 | 0 | −1 |
| 1 | 0 | 1 | −1 |
| 1 | 0 | 0 | −2 |
| 0 | 1 | 1 | +2 |
| 0 | 1 | 0 | +1 |
| 0 | 0 | 1 | +1 |
| 0 | 0 | 0 | 0 |

a partial product generator (30) having a first input connected to the output of said translator and its second input connected to receive said second operand X having 2M binary bits grouped into M pairs $(X_{I+1}, X_I)$ expressed as the numerical value $X_I'$ of the respective pair, for multiplying said translated first operand times said second operand and outputting partial products consisting of signed digits, said partial product generator operating to multiply

$$\text{for } Y_j' = +2; \quad X_I' \cdot Y_j' = +X'_{I-1}$$
$$Y_j' = -2; \quad X_I' \cdot Y_j' = -X'_{I-1}$$
$$Y_j' = +1; \quad X_I' \cdot Y_j' = +X_I'$$
$$Y_j' = -1; \quad X_I' \cdot Y_j' = -X_I'$$
$$Y_j' = \ 0; \quad X_I' \cdot Y_j' = 0$$

to generate N×M partial products consisting of signed digits $X_I'$ times $Y_j'$;

an array of adders (36), each adder having an input connected to two outputs from said partial product generator, for adding a first signed digit $A = X_I'$ times $Y_j'$ of a first partial product to a second signed digit $B = X_I'$ times $Y_j'$ of a second partial product, providing a sum consisting of a sequence of signed digits, each adder operating on

    INPUTS: −3≤A≤+3
            −3≤B≤+3
            Carry In=−1, 0, +1

and generating

    OUTPUTS: Carry Out=−4, 0, +4 (independent of Carry In)
             −3≤C≤+3

where

    for +3≤A+B≤+6, Carry Out=+4
        −2≤A+B≤+2, Carry Out= 0
        −6≤A+B≤−3, Carry Out=−4

and

    C=A+B−(Carry Out)+(Carry In)

said sequence of signed digits output from said array of adders being the full product Z′ expressed as a plurality of M+N−1 signed digits $Z_i'$;

an inverse translator (40) having an input connected to the output of said adder array, for operating on said sequence of signed digits $Z_i'$ output from said adder array, for providing a conventional binary expression Z OUT expressed as the value $Z_i'$ of pairs of adjacent binary numbers for the product of said first and second operands, said inverse translator operating on an input

$$-3 \leq Z_i' \leq +3$$

and eliminating negative values, by using −1=−2+1 to generate an output, where $Z_i$ is given by the Table

|  |  | $Z_i'$ | | | | | | |
|---|---|---|---|---|---|---|---|---|
|  |  | +3 | +2 | +1 | 0 | −1 | −2 | −3 |
|  | 1 | 2 | 1 | 0 | 3 | 2 | 1 | 0 |
| −1, IN | 0 | 3 | 2 | 1 | 0 | 3 | 2 | 1, |

and where the value $-1_iIN$ is a binary "1" if there is a minus carry-in and is a "0" if there is no minus carry-in.

**Patentanspruch**

Verbesserter Multiplizierer zum Multiplizieren eines ersten Operanden Y mit einem zweiten Operanden X, enthaltend:

einen Übersetzer vom Booth-Typ (22) mit einem Eingang zur Aufnahme des ersten Operanden Y aus 2N Bits $Y_j$, die in N Paaren $(Y_{j+1}, Y_j)$ gruppiert sind, zur Übersetzung der Folge von N Paaren $(Y_{j+1}, Y_j)$ des ersten Operanden Y in eine Folge von N Ziffern $(Y_j')$ mit Vorzeichen, wobei dieser Übersetzer mit positiven Zweierkomplement-Zahlen arbeitet, um für gerade j wie folgt zu übersetzen:

| $Y_{j+1}$ | $Y_j$ | $Y_{j-1}$ $\longrightarrow$ | $Y_j'$ |
|---|---|---|---|
| 1 | 1 | 1 | 0 |
| 1 | 1 | 0 | −1 |
| 1 | 0 | 1 | −1 |
| 1 | 0 | 0 | −2 |
| 0 | 1 | 1 | +2 |
| 0 | 1 | 0 | +1 |
| 0 | 0 | 1 | +1 |
| 0 | 0 | 0 | 0 |

einen Teilprodukt-Generator (30) mit einem ersten Eingang, der mit dem Ausgang des Übersetzers verbunden ist, und mit einem zweiten Eingang zur Aufnahme des zweiten Operanden X mit 2M Bits, die in M Paaren $(X_{l+1}, X_l)$ gruppiert sind, welche als der numerische Wert $X_l'$ des betreffenden Paares ausgedrückt sind, zum Multiplizieren des übersetzten ersten Operanden mit dem zweiten Operanden, und um ein Teilprodukt auszugeben, welches aus Ziffern mit Vorzeichen besteht, wobei dieser Teilprodukt-Generator folgendermassen arbeitet:

$$\text{für } Y_j'=+2; \quad X_l' \cdot Y_j'=+X_{l-1}'$$
$$Y_j'=-2; \quad X_l' \cdot Y_j'=-X_{l-1}'$$
$$Y_j'=+1; \quad X_l' \cdot Y_j'=+X_l'$$
$$Y_j'=-1; \quad X_l' \cdot Y_j'=-X_l'$$
$$Y_j'= 0; \quad X_l' \cdot Y_j'= 0$$

um N×M Teilprodukte zu erzeugen, die aus vorzeichenbehafteten Ziffern $X_l'$ multipliziert mit $Y_j'$ bestehen;

eine Anordnung von Addieren (36), wobei jeder Addierer einen Eingang hat, der mit zwei Ausgängen des Teilprodukt-Generators verbunden ist, um eine erste vorzeichenbehaftete Ziffer $A=X_l'$ mal $Y_j'$ eines ersten Teilproduktes zu einer zweiten vorzeichenbehafteten Ziffer $B=X_l'$ mal $Y_j'$ eines zweiten Teilproduktes zu addieren und eine Summe abzugeben, die aus einer Folge von Ziffern mit Vorzeichen besteht, wobei jeder Addierer arbeitet mit

EINGANGSGRÖSSEN: $-3 \leq A \leq +3$
$-3 \leq B \leq +3$
Übertrag_ein$=-1, 0, +1$

zur Erzeugung von

AUSGANGSGRÖSSEN: Übertrag_aus$=-4, 0, +4$
(unabhängig vom Übertrag ein)
$-3 \leq C \leq +3$

und wobei für

$+3 \leq A+B \leq +6$, Übertrag_aus$=+4$
$-2 \leq A+B \leq +2$, Übertrag_aus$= 0$
$-6 \leq A+B \leq -3$, Übertrag_aus$=-4$

sowie

$C=A+B-(\text{Übertrag\_aus})+(\text{Übertrag\_ein}),$

und wobei die von der Anordnung von Addieren abgegebene Folge vorzeichenbehafteter Ziffern das vollständige Produkt Z' ist, welches als eine Mehrzahl M+N−1 vorzeichenbehafteter Ziffern $Z_i'$ ausgedrückt ist;

einen Rückübersetzer (40) mit einem Eingang, der mit dem Ausgang der Addierer-Anordnung verbunden ist, zur Verarbeitung dieser Folge vorzeichenbehafteter Ziffern $Z_i'$, welche von der Addierer-Anordnung abgegeben wird, zwecks Erzeugung eines konventionellen binären Ausdrucks Z_AUS für das Produkt des ersten und zweiten Operanden, wobei dieser Rückübersetzer die

$$\text{Eingangsgrösse } -3 \leq Z_i' \leq +3$$

bearbeitet und negative Werte eliminiert durch Einsetzen von $-1=-2+1$, zwecks Erzeugung einer Ausgangsgrösse, wobei $Z_i'$ gegeben ist durch die Tabelle

|  |  | $Z_i'$ |  |  |  |  |  |  |
|---|---|---|---|---|---|---|---|---|
|  |  | +3 | +2 | +1 | 0 | −1 | −2 | −3 |
| −1,ein | 1 | 2 | 1 | 0 | 3 | 2 | 1 | 0 |
| | 0 | 3 | 2 | 1 | 0 | 3 | 2 | 1, |

und wobei der Wert −1,ein binäre "1" ist bei einem negativen Übertrag_ein und eine "0", wenn kein negativer Übertrag_ein vorliegt.

## Revendication

Multiplieur perfectionné utilisé pour multiplier un premier opérande Y par un second opérande X, comprenant:

un traducteur du type Booth (22) possédant une entrée raccordée de manière à recevoir le premier opérande Y possédant 2N bits $Y_j$ regroupés en N couples $(Y_{j+1}, Y_j)$ servant à convertir la suite formée de N couples $(Y_{j+1}, Y_j)$ dudit premier opérande Y en une suite de N chiffres $(Y_j')$ affectés de signes, ledit traducteur traitant des nombres positifs formés de compléments à 2, de manière à réaliser la conversion, pour j pair,

| $Y_{j+1}$ | $Y_j$ | $Y_{j-1}$ $\longrightarrow$ | $Y_j'$ |
|---|---|---|---|
| 1 | 1 | 1 | 0 |
| 1 | 1 | 0 | −1 |
| 1 | 0 | 1 | −1 |
| 1 | 0 | 0 | −2 |
| 0 | 1 | 1 | +2 |
| 0 | 1 | 0 | +1 |
| 0 | 0 | 1 | +1 |
| 0 | 0 | 0 | 0 |

un générateur (30) de produits partiels, comportant une première entrée raccordée à la sortie dudit traducteur, tandis que la seconde entrée est raccordée de manière à recevoir ledit second opérande X comportant 2M bits regroupés en M couples $(X_{i+1}, X_i)$ et exprimé sous la forme de la valeur numérique $X_i'$ du couple respectif, pour multiplier ledit premier opérande converti par ledit second opérande et délivrer des produits partiels constitués par des chiffres munis de signes, ledit générateur de produits partiels agissant de manière à réaliser la multiplication

$$\text{pour } Y_j'=+2; \quad X_i' \cdot Y_j'=+X_{i-1}'$$
$$Y_j'=-2; \quad X_i' \cdot Y_j'=-X_{i-1}'$$
$$Y_j'=-1; \quad X_i' \cdot Y_j'=+X_i'$$
$$Y_j'=-1; \quad X_i' \cdot X_j'=-X_i'$$
$$Y_j'=\ 0; \quad X_i' \cdot Y_j'=\ 0$$

pour produire N×M produits partiels constitués par des chiffres $X_i'$ affectés d'un signe, multipliés par $Y_j'$;

un réseau d'additionneurs (36), dont chacun possède une entrée raccordée à deux sorties dudit générateur de produits partiels, pour réaliser l'addition d'un premier chiffre muni d'un signe, $A=X_i'$ fois $Y_j'$, d'un premier produit partiel à un second chiffre muni d'un signe, $B=X_i'$ fois $Y_j'$, d'un second produit partiel, en fournissant une somme constituée par une suite de chiffres munis de signes, chaque additionneur agissant sur

DES ENTREES: $-3 \leq A \leq +3$
$-3 \leq B \leq +3$
Report entrant $= -1, 0, +1$

et produisant

DES SORTIES: Report sortant $= -4, 0, +4$ (indépendant du report entrant)
$-3\ C\ +3$

avec

pour $+3 \leq A+B \leq +6$, report sortant $= +4$
$-2 \leq A+B \leq +2$, report sortant $= 0$
$-6 \leq A+B \leq -3$, report sortant $= -4$

et

$$C = A+B - (\text{report sortant}) + (\text{report entrant})$$

ladite suite de chiffres affectés de signes, délivrée par ledit réseau d'additionneurs, étant le produit $Z'$ exprimé sous la forme d'une pluralité de $M+N-1$ chiffres $Z_i'$, affectés de signes;

un traducteur inverse (40) comportant une entrée raccordée à la sortie dudit réseau d'additionneurs, pour agir sur ladite suite de chiffres $Z_i'$ affectés de signes, délivrée par ledit réseau d'additionneurs de manière à délivrer une expression binaire classique Z OUT exprimée sous la forme de la valeur $Z_i'$ de couples de nombres binaires adjacents pour le produit desdits premier et second opérandes, ledit traducteur inverse agissant

sur une entrée $-3 \leq Z_i' \leq +3$

et supprimant les valeurs négatives, on utilise au moins $-1 = -2+1$ pour produire une sortie, $Z_i$ étant donné par la table

|  |  | +3 | +2 | +1 | 0 | −1 | −2 | −3 |
|---|---|---|---|---|---|---|---|---|
|  | 1 | 2 | 1 | 0 | 3 | 2 | 1 | 0 |
| $-1_i$ IN | 0 | 3 | 2 | 1 | 0 | 3 | 2 | 1, |

et la valeur $-1_i$IN étant un "1" binaire s'il existe un report entrant négatif et étant un "0" s'il n'existe aucun report entrant négatif.

FIG. 1

0 129 039

FIG. 2

FIG. 3